**Europäisches Patentamt**

(19) **European Patent Office**

**Office européen des brevets**

(11) Publication number : **0 417 929 B1**

(12) # EUROPEAN PATENT SPECIFICATION

(45) Date of publication of patent specification :
**24.03.93 Bulletin 93/12**

(51) Int. Cl.⁵ : **F41H 5/04, F41H 1/02**

(21) Application number : **90309359.9**

(22) Date of filing : **28.08.90**

(54) **Composite armour materials.**

(30) Priority : **14.09.89 GB 8920801**

(43) Date of publication of application :
**20.03.91 Bulletin 91/12**

(45) Publication of the grant of the patent :
**24.03.93 Bulletin 93/12**

(84) Designated Contracting States :
**CH DE FR GB IT LI NL**

(56) References cited :
**EP-A- 0 197 279**
**EP-B- 0 056 703**
**WO-A-89/01125**
**WO-A-89/01127**

(73) Proprietor : **IMPERIAL CHEMICAL INDUSTRIES PLC**
**Imperial Chemical House, Millbank**
**London SW1P 3JF (GB)**

(72) Inventor : **Savage, Gary Malcolm**
**107 Friars Lane**
**Barrow in Furnis, Cumbria, LA13 9NX (GB)**
Inventor : **Tacon, Kenneth Peter**
**47 Severn Drive**
**Guisborough, Cleveland TS14 8AT (GB)**
Inventor : **Welsh, Ian Trevor**
**20 Beaufort Close**
**Hunters Hill, Guisborough, Cleveland (GB)**

(74) Representative : **Graham, John George et al**
**ICI Group Patents Services Dept. PO Box 6**
**Shire Park Bessemer Road**
**Welwyn Garden City Herts, AL7 1HD (GB)**

Jouve, 18, rue Saint-Denis, 75001 PARIS

## Description

This invention relates to composite armour materials and to armour comprised of such composite armour materials.

Composite armour materials have found application as ballistic-resistant materials for protective clothing for police, security and army personnel, for example. In such applications, the best materials often comprise 100% fibres, but more typically composite armour materials, for example of aromatic polyamide fibres and phenolic/PVB, polyester or polypropylene, containing about 80% by weight of fibre are used. The ballistic resistance of such materials is derived from the fibre content thereof; the polymeric matrix contributes very little to ballistic resistance but is primarily present to bind the fibres together in a coherent structure for ease of handling.

However, a significant proportion of attacks on police and security personnel are sharp object attacks, ie attacks using knives, broken glass, scissors and sharpened tools such as screwdrivers, chisels etc. Investigation has shown that the aforementioned ballistic-resistant materials offer substantially no resistance to such attacks.

Similarly, other protective materials such as unreinforced tough polycarbonate shields used by security personnel, whilst being resistant to repetitive blunt object attack, have been found to shatter under sharp object attack.

It is an object of the invention to provide a composite armour material and armour comprised thereof which exhibits sharp object penetration resistance and also exhibits ballistic-resistance properties.

According to the present invention, composite armour material comprises a plurality of consolidated prepregs of a polymeric matrix containing continuous collimated glass filaments, said polymeric matrix comprising a crystalline polyolefin composition having a fracture toughness of at least $0.5 MNm^{-3/2}$, more particularly of at least $1.0 MNm^{-3/2}$, said prepregs being constructed and arranged such that some of said filaments extend in a direction transverse to others of said filaments.

By "crystalline polyolefin" we mean polyolefins in which at least some of the polymer chains are assembled into crystallites. Such polyolefins give characteristic x-ray diffraction patterns and exhibit significant melting peaks in equipment such as differential scanning calorimeters.

The crystalline polyolefin composition includes polymers derived from one or more polymerised olefin monomers, particularly propylene and propylene and one or more other monomers, and blends of such polymers. Preferably, the crystalline polyolefin composition is polypropylene. Preferably, to improve the interface between the matrix and the filaments, the crystalline polyolefin composition comprises a graft copolymer obtained by grafting an unsaturated dicarboxylic acid or anhydride thereof onto the polyolefin. The unsaturated acid or anhydride may be any acid or anhydride which reacts with the polymer to form a graft copolymer which has improved interface properties with the glass filaments as compared to the polymer alone. Preferred compounds are maleic acid, itaconic acid or, particularly, maleic anhydride.

It is preferred that the continuous collimated filaments extend the width and length of the material.

The prepregs may be arranged in superimposed layers, the filaments in adjacent layers being disposed transversely to one another. Preferred orientations of the filaments of successive layers are bidirectional, ie 0°/90°, or quasi-isotropic, ie 0°/45°/-45°/90°.

In an alternative construction, the prepregs may be in the form of impregnated woven material, particularly woven material having balanced weaves (ie substantially equal numbers of filaments in each direction) such as plain, twill or satin weaves. The prepregs are laid up in superimposed layers which may be arranged to give quasi-isotropic orientation of the filaments.

In yet another construction, prepreg in tape form may be woven to form individual layers of the composite. The woven layers of prepreg are laid up in superimposed layers which may be arranged to give quasi-isotropic orientation of the filaments.

In yet another construction, mixtures of prepregs arranged in superimposed layers and woven material may be used.

Preferably, the filaments comprise 20% to 80% by weight, are preferably 30% to 70%, of the composite armour material.

The filaments are preferably sized with a material compatible with the polymeric matrix and contain an effective silane coupling agent.

The prepregs may be prepared by any recognised impregnation technique such as solution impregnation and melt impregnation, the latter including film stacking, powder impregnation and pultrusion techniques. A particularly preferred melt impregnation technique is described in EP-B-56703.

The use of prepregs containing filaments in a polymeric matrix in a composite armour material is known as such from WO89/01125. In this known armour, the prepregs are arranged such that the filaments of adjacent prepregs extend in transverse directions.

Preferably, the polymeric matrix of the composite armour material has a tensile modulus of at least 0.5GPa.

Preferably, the composite armour material has a strong fibre/matrix interface which can be characterised by a transflexural strength test in which unidirectionally-reinforced laminates of the material are tested in a 3-point bending perpendicular to the fibre axis. Preferably, the material has a transflexural strength of at least 10MPa, and more particularly of at least 15MPa, and up to 50MPa.

Preferably, the composite armour material has an areal density of at least 12.5kgm$^{-2}$, preferably at least 14kgm$^{-2}$, and, more particularly, at least 15kgm$^{-2}$.

The Applicants have found that the composite armour material of the present invention has a surprisingly high resistance to penetration by sharp objects, eg knife blades whilst surprisingly exhibiting a significant resistance to ballistic projectiles.

Investigation has shown that the wide variety of knife blades available can be generalised by two blade shapes, namely a thin, narrow flick knife-type blade (blade 1) and a broad commando-type blade (blade 2), blade 1 having the greater penetrative power. It has also been shown that the maximum impact energy for human performance in stabbing with a knife is approximately 42J. To minimise likely damage to major organs in a sharp object attack, it is also desirable that sharp object resistant materials do not permit a rear side penetration of more than 10mm.

Thus, the composite armour material of the invention preferably does not permit a blade 1 rear side penetration of more than 10mm at impact energies up to 42J.

The invention includes armour comprising the composite armour material hereinbefore described in the form of a shaped article. The shaped article can be in the form of planar, single, double or complex curvature sheet which can be incorporated into armour or which can be used on its own as armour. Applications are, for example, body armour, helmets, protective panels for buildings, boats etc, boat hulls and other vehicle bodies.

A particularly important aspect of the invention is body armour and the present invention specifically includes body armour comprising a shaped article of the composite armour material hereinbefore described above. Typically, the body armour comprises a garment, eg a harness arrangement which can be worn on a human torso, the garment incorporating at least one plate of the composite armour material generally shaped to conform to a human torso. Preferably, the harness incorporates front and rear plates of the composite armour material.

The armour according to the invention may also comprise other materials. For example, particularly in body armour applications, resilient foam materials for reducing bruising and trauma associated with attacks, or ballistic-resistant materials for improving the ballistic resistance of the armour, particularly when weight considerations are important. Such additional materials may be incorporated into the armour either loosely or by being bonded or laminated to the composite armour material. It will be apparent that whenever components other than the composite armour material contribute to the ballistic resistance in their own right, the areal density of the composite armour material may be reduced according to the nature of the ballistic threat and the specific design of the hybrid armour system.

The invention will now be illustrated by reference to the following Examples. Additionally, composite armour material and armour will also be described and illustrated by way of example only with reference to the accompanying drawings, in which:-

Figure 1    is a schematic sectional drawing of apparatus used to reproducibly test the effect of simulated knife attacks on the composite armour material according to the invention; and

Figure 2    is a schematic front perspective view, partly in ghost outline, of body armour according to the invention.

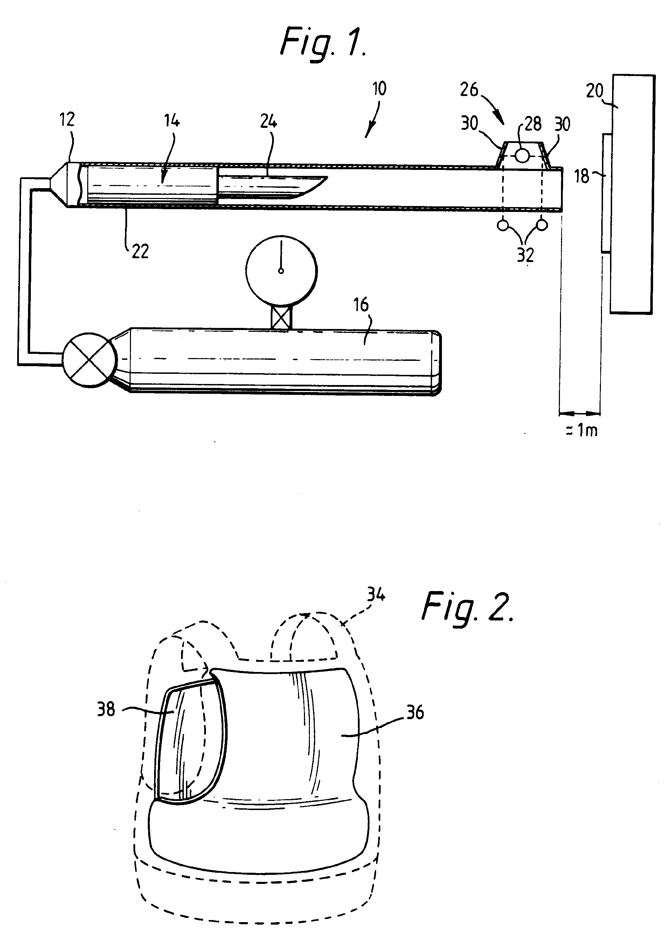

Referring to Figure 1, the apparatus 10 consists of a barrel 12 along which a standard knife 14 is propellable by pressurised gas from a cylinder 16 to a target plate 18 mounted on a holder 20 against human body simulating putty. The knife 14 consists of a nylon sabot 22 in which is located a blade 24 (blade 1 or blade 2 as described above). To determine the energy with which the knife strikes the target, the apparatus 10 has a detector system 26 located at the exit end of the barrel 12. The detector system 26 consists of a light source 28 located equidistant from two angled mirrors 30 which direct beams of light to two light detectors 32 which are in turn connected to a timing counter (not shown). The timing counter is started when the first beam of light is broken and stopped when the second is broken , the count from the timing counter being proportional to the time (t) taken by the knife to travel a distance (d) (ie 75mm). Thus, the velocity (v) of the knife (v=d/t) and, given that the weight of the knife 14 was 400g, the energy of impact can be readily calculated.

The apparatus 10 was used in knife resistance tests for composite armour material according to the invention, the results of the tests being given in the Examples below.

Referring to Figure 2, body armour in the form of a harness 34 incorporating front and rear plates 36, 38, respectively, of composite armour material according to the invention. As will be appreciated by those skilled

EP 0 417 929 B1

in the art, the harness 34 can take a variety of forms and the drawing is intended to be illustrative only and not in any way limiting as to the form such armour can take.

Example 1

A laminated panel was prepared by compression moulding 24 unidirectional prepregs of Plytron in a quasi-isotropic layup, Plytron being a trade name of Imperial Chemical Industries PLC for a thermoplastic/continuous collimated reinforcement fibre prepreg for industrial composite applications. In this case, the Plytron prepreg was a glass reinforced polypropylene. The Plytron prepreg typically has a transflexural strength of the order of 25MPa and the polypropylene used therein typically has a tensile modulus of 1.5-1.6 GPa and a fracture toughness of the order of 1-1.5 $MNm^{-3/2}$. The panel had an areal density of 15.0$kgm^{-2}$ and a fibre content of 50% by weight. The panel was subjected to a series of knife penetration tests using apparatus 10 described above. The results are summarised in the Table 1 below.

## Table 1

| Blade Type | Impact Energy J | Penetration mm |
|---|---|---|
| 1 | 40.0 | 2 |
| | 43.0 | 3 |
| | 50.3 | 6 |

Example 2 (Comparative)

Samples of woven Kevlar (Kevlar is a trade mark of Du Pont and is used in relation to aromatic polyamide fibres) (plain weave) fabric, woven Kevlar (plain weave) fabric (80% by weight)/polypropylene and unreinforced polycarbonate all having an areal density of approximately 10 $kgm^{-2}$ were subjected to the knife test using an impact energy of approximately 42J. In all instances, complete penetration to the hilt of the knife occurred. In the case of the polycarbonate, the sample shattered.

Example 3

Laminated panels (420mm x 420mm) were made as described in Example 1 using Plytron ZM4350PA prepreg, the Plytron ZM4350PA grade describing a 35% v/v (60% by weight) glass reinforced polypropylene. Panel 1 consisted of 20 plies of 0°/90° laid up prepreg and outer plies of 5 harness satin weave material which plies were prepared by weaving 12.5mm wide unidirectional prepreg tape. Panel 2 consisted of 13 plies of 4,1 twill weave which plies were prepared by weaving 12.5mm wide unidirectional prepreg tape. Panel 3 consisted of 23 plies of 0°/90° laid up prepreg and outer plies of plain weave material which plies were prepared by weaving 12.5mm wide unidirectional prepreg tape. Panels 4 to 6 consisted of 26, 16 and 26 plies, respectively, of 0°/90° laid up prepreg. Other details of the panels are summarised in Table 2 below.

4

Table 2

| Panel Density | Fibre kgm⁻² | Content % by weight |
|---|---|---|

| | Fibre kgm$^{-2}$ | Content % by weight |
|---|---|---|
| 1 | 13.6 | 60 |
| 2 | 18.5 | 61 |
| 3 | 15 | 59.7 |
| 4 | 18 | 60.8 |
| 5 | 10.8 | 60 |
| 6 | 18 | 60.8 |

The panels were subjected to ballistic tests as hereinafter described.

Panel 1 was tested according to BS5051 with three bullets fired into the corners of an equilateral triangle of sides 105mm from a range of 3m. Two of the bullets were 0.357" (9mm) Magnum and the third bullet was a 0.44" (11.2mm) Magnum. All of the bullets penetrated and severe spalling occurred in the woven ply on the rear face of the panel. In the worst instance, a piece of tape was pulled inward from the edge of the panel by a distance of 130mm.

Panel 2 was similarly tested by firing three 9mm IIZ bullets and then three 0.357" (9mm) magnum bullets at the same panel at points 105mm from the impact points of the first set of three bullets. The velocities of the 9mm IIZ bullets were 467.67m/s, 435.01m/s and 448.35m/s and in each case the panel was not penetrated and it suffered only very slight cracking on its rear face. The velocities of the 0.357" magnum bullets were 467.46m/s, 479.85m/s and 451.35m/s and the panel was not penetrated in the case of the first and third bullets with only minor cracking on its rear face being observed in the case of the first bullet and was just penetrated in respect of the second bullet.

Panel 3 was similarly tested using three 0.357 (9mm) magnum bullets. The first bullet did not penetrate the panel and there was no sign of damage on its rear face; and the other two bullets did not penetrate the panel, but there was splintering of the ply on its rear face to a distance of 25mm from the centres of impact and in respect of one of those two bullets there was slight cracking of the rear ply up to 60mm from the centre of the impact.

Panel 4 was tested with a loz (28.4g) solid slug from a full bore rifle at a distance of 10m. The slug did not penetrate although on the reverse side of the panel cracking was observed along the fibre direction to a distance of 150mm from the centre of the impact with delamination occurring over a 40mm band width. However, no spalling of the rear ply of the panel occurred.

Panel 5 was tested by firing a 7½ shot, 12 bore shot gun at the panel from a distance of 3m. The shot penetrated the panel and significant spalling of the rear side of the panel occurred.

Panel 6 was tested by firing a number of projectiles at it from a distance of 3m. The following observations were made:-

- 0.22" (5.5mm) bullet - no penetration, very little evidence of cracking on the rear surface
- 7½ shot, 12 bore shot gun - no penetration although impact surface badly damaged - slight cracking of rear ply observed along fibre direction
- 0.357" (9mm) magnum - no penetration but cracking of rear ply observed along fibre direction up to 115mm away from the centre of the impact - no spalling observed
- 9mm Mark 22 - no penetration but similar cracking to 0.357" magnum round observed
- 0.38" (8.9mm) special - no penetration or cracking occurred but delamination was evident by local swelling between impacted front plies and rear plies.

**Claims**

1. Composite armour material comprising a plurality of consolidated prepregs of a polymeric matrix containing continuous collimated glass filaments, said polymeric matrix comprising a crystalline polyolefin composition having a fracture toughness of at least 0.5MNm$^{-3/2}$, said prepregs being constructed and arranged such that some of said filaments extend in a direction transverse to others of said filaments.

2. A material according to claim 1, in which the crystalline polyolefin composition is selected from polypropylene, polypropylene copolymers and blends of such polymers.

3. A material according to claim 1 or claim 2, in which the continuous collimated filaments extend the width and length of the material.

4. A material according to any one of the preceding claims, in which the filaments comprise 20% to 80% by weight, more preferably 30% to 70%, of material.

5. A material according to any one of the preceding claims, in which the polymeric matrix has a tensile modulus of at least 0.5GPa.

6. A material according to any one of the preceding claims, which has a transflexural strength, as determined on unidirectionally-reinforced material, of at least 10MPa and up to 50MPa.

7. A material according to any one of the preceding claims, which has an areal density of at least 12.5kgm$^{-2}$, more particularly at least 15kgm$^{-2}$.

8. Armour comprising the composite armour material as defined in any one of the preceding claims in the form of a shaped article.

9. Armour according to claim 8, comprising body armour.

10. Armour according to claim 8 or claim 9, in which the composite armour material is used in conjunction with other armour materials.

**Patentansprüche**

1. Mehrkomponenten-Schutzschildmaterial mit einer Vielzahl von verfestigten Prepregs einer polymeren Matrix mit kontinuierlich kollimierten Glasfilamenten, wobei die polymere Matrix eine kristalline Polyolefin-Zusammensetzung mit einer Bruchzähigkeit von wenigstens 0,5 MNm$^{-3/2}$ aufweist und die Prepregs derartig aufgebaut und angeordnet sind, daß einige der Filamente sich in einer Richtung quer zu anderen der Filamente erstrecken.

2. Material nach Anspruch 1, wobei die kristalline Polyolefin-Zusammensetzung aus Polypropylen, Polypropylen-Copolymeren und Mischungen solcher Polymere ausgewählt ist.

3. Material nach Anspruch 1 oder 2, wobei die kontinuierlich kollimierten Filamente sich längs der Breite und Länge des Materials erstrecken.

4. Material nach einem der vorhergehenden Ansprüche, wobei die Filamente 20 bis 80 Gew.%, vorzugsweise 30 bis 70 % des Materials ausmachen.

5. Material nach einem der vorhergehenden Ansprüche, wobei die polymere Matrix ein Zugmodul bzw. Zugelastizitätsmodul von wenigstens 0,5 GPa aufweist.

6. Material nach einem der vorhergehenden Ansprüche, das eine Querbiegefestigkeit, gemessen an einem unidirektional-verstärkten Material, von wenigsten 10MPa bis zu 50 MPa aufweist.

7. Material nach einem der vorhergehenden Ansprüche, das eine Flächendichte von wenigsten von 12,5 kgm$^{-2}$, bevorzugt wenigstens 15 kgm$^{-2}$ aufweist.

8. Schutzschild umfassend das Mehrkomponenten-Schutzschildmaterial nach einem der vorhergehenden Ansprüche in der Form eines geformten Gegenstandes.

9. Schutzschild nach Anspruch 8, umfassend einen Körperschutzschild.

10. Schutzschild nach Anspruch 8 oder 9, wobei das Mehrkomponenten-Schutzschildmaterial in Verbindung mit anderen Schutzschild-Materialien verwendet wird.

**Revendications**

1. Matière de blindage composite comprenant une pluralité d'éléments préimprégnés consolidés, constitués d'une matrice de polymère contenant des filaments de verre continus collimatés, ladite matrice de polymère comprenant une composition de polyoléfine cristalline ayant une dureté de fracture d'au moins $0,5MNm^{-3/2}$, les dits éléments préimprégnés étant construits et agencés de sorte que certains des dits filaments s'étendent dans une direction transversale à d'autres desdits filaments.

2. Matière suivant la revendication 1, dans laquelle la composition de polyoléfine cristalline est choisie parmi polypropylène, copolymères de polypropylène et mélanges de tels polymères.

3. Matière suivant la revendication 1 ou la revendication 2, dans laquelle les filaments continus collimatés s'étendent dans le sens de la largeur et le sens de la longueur de la matière.

4. Matière suivant l'une quelconque des revendications précédentes, dans laquelle les filaments représentent de 20% à 80% en poids et de préférence de 30% à 70% de la matière.

5. Matière suivant l'une quelconque des revendications précédentes, dans laquelle la matrice de polymère a un module de traction d'au moins 0,5GPa.

6. Matière suivant l'une quelconque des revendications précédentes, qui a une résistance à la flexion transversale, comme déterminé sur une matière renforcée unidirectionnellement, d'au moins 10MPa et jusqu'à 50MPa.

7. Matière suivant l'une quelconque des revendications précédentes, qui a une densité par unité de surface d'au moins $12,5kgm^{-2}$ et plus particulièrement d'au moins $15\ kgm^{-2}$.

8. Cuirasse comprenant la matière de blindage composite suivant l'une quelconque des revendications précédentes, sous la forme d'un article profilé.

9. Cuirasse suivant la revendication 8, constituant une cuirasse corporelle.

10. Cuirasse suivant la revendication 8 ou la revendication 9, dans laquelle la matière de blindage composite est utilisée en association avec d'autres matières de blindage.

# Fig. 1.

# Fig. 2.